# EUROPEAN PATENT SPECIFICATION

(11) **EP 1 185 382 B1**
(45) Date of publication and mention of the grant of the patent: **23.01.2008**
(21) Application number: 00930179.7
(22) Date of filing: 27.04.2000
(51) Int. Cl.: B07C 5/34, B07C 5/342, G01N 21/90

(54) **SYSTEM AND METHOD FOR INSPECTING THE STRUCTURAL INTEGRITY OF VISIBLY CLEAR OBJECTS**
VORRICHTUNG UND VERFAHREN ZUR UNTERSUCHUNG DER STRUKTURINTEGRITÄT VON DURCHSICHTIGEN GEGENSTÄNDEN
SYSTEME ET PROCEDE PERMETTANT D'INSPECTER L'INTEGRITE STRUCTURELLE D'OBJETS VISIBLEMENT TRANSPARENTS

(30) Priority: 29.04.1999 US 131561 P
(43) Date of publication of application: 13.03.2002
(73) Proprietor: PRESSCO TECHNOLOGY INC., Solon, Ohio 44139-1847 (US)
(72) Inventor: CECH, Steven, D., Aurora, OH 44202 (US)
(74) Representative: Kador & Partner
(86) International application number: PCT/US2000/011308
(87) International publication number: WO 2000/066283

(56) References cited:
- EP-A- 0 587 037
- DE-A- 3 245 908
- DE-A- 3 611 536
- US-A- 3 356 203
- US-A- 3 778 617
- US-A- 4 367 405
- US-A- 4 486 776
- US-A- 5 141 110

## Description

The application relates to a sensing apparatus useful for inspecting the structural integrity of visible clear objects according to the pre-amble of claim 1. It also relates to a sensing method wherein visibly clear objects are inspected for structural integrity according to the pre-amble of claim 11. In particular, it relates to the inspection of visibly clear food and/or beverage containers manufactured out of glass or plastic. Though the invention will be described with reference to those items, it should be understood that the invention has a broader application to the inspection of any manufactured or naturally occurring object having a predominately visibly-clear structure.

Machine vision systems providing some degree of functionality related to inspecting the structural integrity of visibly clear glass and/or plastic containers have been conceived and constructed. Generally, such systems are based on the operation of an area array sensor, most typically a CCD sensor, sensitive to energy in the visible portion of the electromagnetic spectrum (400nm to 700nm).

For instance DE-A-3245908 discloses an apparatus and a method for inspecting bottles according to the pre-amble of claim 1 and claim 11, respectively. The bottles are illuminated from the side whereby light is passed through to a photocell as sensor device. Light is also reflected from the insides of the neck of the bottle following refraction and passes through the bottom of the bottle to photocells below the bottle. Light-intensity difference is caused by foreign bodies and fouling are detected and used to produce switching signals to control the routing of bottles to conveyor belts. For purposes of this disclosure, the term visibly clear specifically means that the material allows very high optical transmission of electromagnetic radiation (light) falling within the 400nm to 700nm visible wavelength range.

One fairly obvious but important fact associated with objects manufactured from visibly clear material is that it is difficult, using state-of-the-art machine vision techniques, to inspect such objects for the presence of material voids in their final formed structure. This is significant because material voids such as holes or cracks are critical part defects which compromise the intended function of the product.

Machine vision inspection systems typically operate by measuring the spatial variations of visible light as it reflects off or transmits through the structure. Since the objects which are to be inspected by such state-of-the-art systems are predominately clear in nature, the spatial light intensity variations which result from the presence of material voids in the material structure are quite small and result in less than adequate overall system performance. Stated in other words, holes and cracks in visibly clear objects are hard to see using machine vision systems operating within the visible region of the electromagnetic spectrum.

Another attribute of current state-of-the-art inspection systems is that they require a great deal of special purpose hardware and software in order to provide any level of product inspection. Light sources, imaging optics, cameras, control electronics, and an image processing computer executing custom inspection algorithms are required for baseline system functionality. This collection of hardware and software components result in an expensive inspection solution which, in many structural inspection applications, falls short of desired performance requirements.

The subject invention overcomes the problems of limited inspection performance and high cost by providing a sensing apparatus and a sensing method according to claim 1 and claim 11, respectively.

In accordance with one aspect of the present invention, there is provided an inspection system comprising at least one detection element sensitive to electromagnetic radiation at a wavelength wherein the object to be inspected is rendered opaque by naturally occurring material molecular (and/or atomic) absorptions. In the disclosed invention, the discrete detection element or detector is positioned at an advantageous location wherein a transport mechanism (either a transport mechanism naturally associated with the manufacturing process or one specifically designed for the purpose of presenting the object to the inspection station) moves the object to be inspected into close proximity to the detection element to accommodate structural inspection. When the object is positioned for inspection, a source of infrared radiation containing a significant component of its emitted energy at wavelengths wherein visibly clear objects become generally opaque is disposed opposite of the detector. Properly positioned, the transported object under inspection passes through the detector/IR source line of sight. So positioned, the detector/IR radiation source components comprise a simple system capable of robustly detecting material voids occurring in the objects under inspection.

In accordance with a more limited aspect of the disclosed invention, the infrared radiation source is chopped (e.g. mechanically or electrically) at a known time-based frequency to aid in the detection of the transmitted IR signal.

Further scope of the applicability of the present invention will become apparent from the detailed description provided below. It should be understood, however, that the detailed description and specific examples, while indicating preferred embodiments of the invention, are given by way of illustration only, since various changes and modifications within the scope of the invention will become apparent to those skilled in the art.

### Brief Description of the Drawings

The present invention exists in the construction, arrangement and combinations of the various parts of the device and/or the steps of the method whereby the objects contemplated are attained as hereinafter more fully set forth in the detailed description and illustrated in the accompanying drawings in which:
FIGURES 1(a) and (b) illustrate a system according to the present invention;
FIGURE 2 shows the transmission spectrum for a sample of PET material; and,
FIGURE 3 is a flowchart according to the present invention.

### Description of the Preferred Embodiment

One parameter often used to both qualitatively and quantitatively describe various materials is an optical attribute referred to as an optical transmission property. In laymen's terms, this parameter describes the ability of a material to allow visible light (that limited portion of the electromagnetic spectrum between 400nm and 700nm) to transmit therethrough. Materials which exhibit no tendency to absorb light in the visible wavelength range are defined as visibly clear materials. Glass, PET, and PEN are examples of visibly clear materials.

The above-referenced material parameter, or property, called optical transmission can be more broadly defined as the reaction of the material to electromagnetic radiation in a wavelength range extending beyond the visible spectrum. For many reasons, it is more useful to consider the wavelength range extending from 400nm in the visible region out to 15um in the infrared region in the qualitative definition of the optical transmission characteristics of the material. In this regard, the techniques of geometric optics apply equally well to this broader wavelength region. In addition, there are radiation sources, detectors, and optical materials and coatings commercially available for use in this broader wavelength region making it feasible to theorize and construct optical instrumentation to sense and quantify optical radiation in this broader wavelength region. When characterized over this broader range, most materials which are highly transmissive in the visible wavelength range exhibit large regions of low and even zero transmission of electromagnetic radiation in other portions of the electromagnetic spectrum.

In much of the electromagnetic spectrum, the visibly clear materials used in the construction of food and beverage containers are completely opaque to incident radiation. The subject invention takes advantage of this material phenomenon under the pretext that it will be advantageous to look for the presence of holes, cracks, or other material voids in a wavelength region wherein the material is opaque as opposed to performing the same inspection operation at wavelengths wherein the material itself is predominately clear, as is done in current inspection systems.

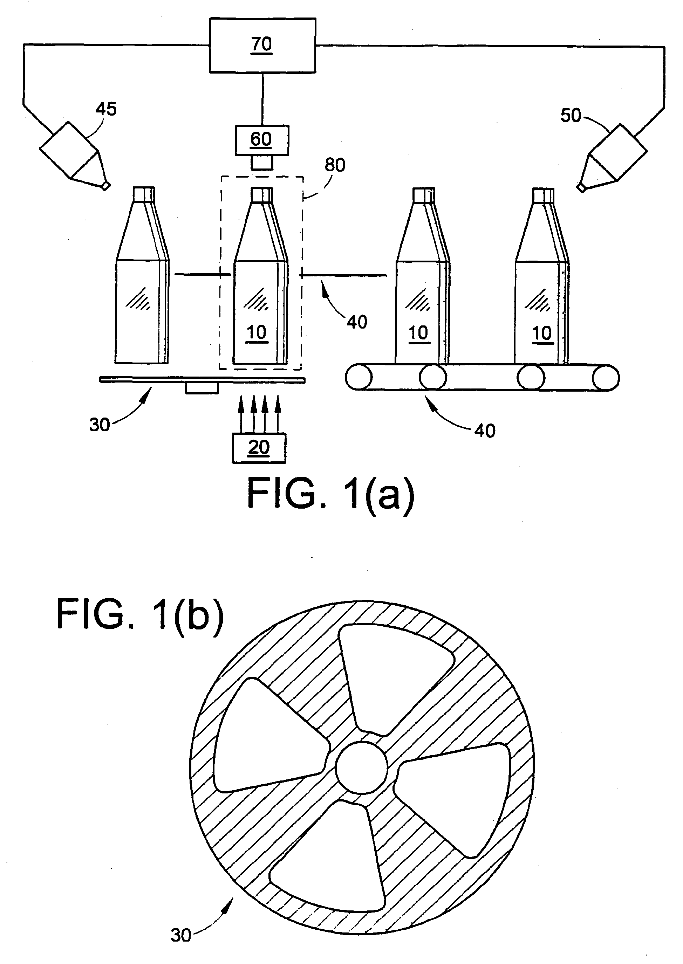

Referring now to the drawings wherein the figures are for the purpose of illustrating the preferred embodiments of the invention only, and not for the purpose of limiting the same, Figure 1(a) represents an overall view of an inspection system according to the present invention. As shown, a transport mechanism 40 is utilized to position visibly clear plastic or glass articles 10 within an inspection zone 80. The transport mechanism may be a conveyor or any other suitable device or arrangement to facilitate the inspection of an object in the zone. In addition, as should be apparent to those skilled in the art, sufficient support structure, including the transport or conveyor mechanism, is provided to the system to support the source and sensor device as well as maintain the object under inspection in proper position for inspection.

In the position shown in zone 80, the object 10 under inspection is positioned within the line of sight between a detector 60 and an infrared source 20. So positioned, a specific portion of the object is subject to inspection for the presence of material voids. In the case of the preferred embodiment, the base portion of the visibly clear container can be inspected for cracks or holes using the disclosed invention. Of course, it is to be appreciated that other portions of the objects may be inspected. Moreover, it is contemplated that objects other than containers can also be inspected.

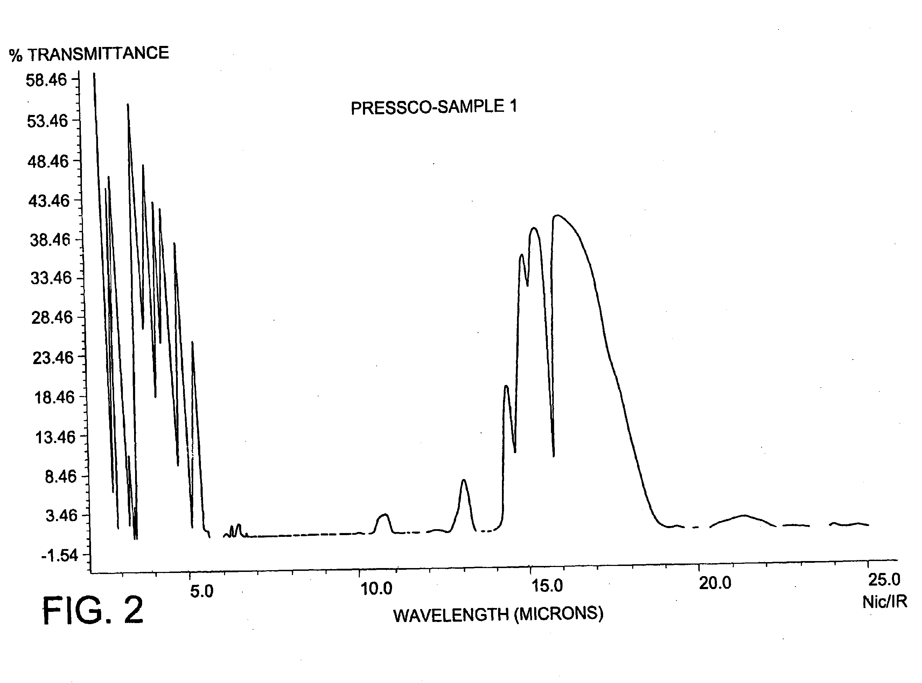

More particularly, when in the inspection zone 80, the object under inspection 10 is positioned in the line of sight between the radiation source 20 and the detector 60. The radiation source is chosen based on its ability to emit significant energy at optical wavelengths wherein the object under inspection 10 is generally opaque. For many visibly clear materials including glass, PET, and PEN, the wavelength region above 3um contains many broad hydrocarbon-based absorption bands which severely limit optical transmission. This behavior is depicted in Figure 2 -- which shows the transmission spectrum of PET from 2um out to 25um. The visible spectrum, not shown, corresponds to 0.4 - 0.7um (or 400-700nm). The large regions where the transmission dips to 0% indicates regions where the material is opaque. The preferred source of IR radiation at these longer wavelengths is a black body or gray body thermal radiator operating at temperatures up to about 1000°C. In addition to black body radiation sources, there exist commercially available solid-state emitters (e.g. LEDs), which may be arranged in arrays, operating at wavelengths of approximately 3um and above which would be applicable to the subject invention. It will be appreciated that the selection of an infrared source will depend largely on the desired wavelength of operation.

Referring back now to Figure 1, to detect and respond to the emitted infrared radiation produced by source 20, a detector 60 needs to be chosen which has a high sensitivity to incident radiation above 3um. There are many potentially suitable single or plural element detector types which could be utilized in the subject invention including Mercury Cadmium Telluride (MCT), Lead Sulfide (PbS), Indium Antimonide (InSb), and Lead Selenide (PbSe). In more general terms, these specific detector types can be described as either photoconductive, photovoltaic, or thermal detector types. Further, it should be appreciated that the detector 60 may also be a suitable camera or any other sensor device that may comprise a one or two dimensional array of photosensitive elements.

To improve the ability of the system to detect small material voids, a chopping mechanism 30 is applied to the energy emitted by the radiation source 20 prior to interacting with the object 10 under test. Such mechanisms are well known in the thermal infrared imaging field. This concept is also similar to the one used to encode and decode AM radio transmissions.

In the preferred embodiment, the system chopper 30 is a mechanical chopper that takes the exemplary form of a rotating disk with alternating opaque/transparent regions which act to modulate the energy emitted by the radiation source 20, as is well known and illustrated in Figure 1(b). In this fashion, the signal of interest is isolated to a specific time-based frequency (the chopping frequency) which facilitates the measurement of low level signals incident on the detector 60.

Alternatively, an electronic, or electrical, chopper may be used. For example, a pulsed infrared source (e.g. pulsed LEDs) may be used wherein the pulsing corresponds to the physical modulating of energy by the application of pulsed drive current.

In either the mechanical chopper or electronic chopper, the advantage of use is that the detector is able to better detect the signal of interest. In this regard, the signal to noise ratio of subsequently received signals is increased. In the preferred embodiment, the signal of interest corresponds to the energy that passes through a crack or void in the bottom of a container 10.

Completing the preferred embodiment of the subject invention are a control electronics module 70 and a part reject mechanism 50. These mechanisms and associated systems are well known in the inspection art. Briefly, however, the control electronics module (or processor comprising various hardware and software configurations) 70 provides power and detector bias signals to the detector 60. In return, it receives inspection information related to the objects structural integrity from the detector 60. From this output, the module 70 is able to determine a state, quality, or acceptability of objects under inspection. It then selectively uses this information to operate a reject mechanism 50 in a pass/fail mode. The reject mechanism may act to physically reject or otherwise mark for subsequent action objects determined to be out of, or alternatively, within specifications as previously standardized and encoded within the processor module 70. Moreover, in systems whereby the objects being inspected are formed in mold cavities within the system, part rejection information will also be useful to correlate and feedback to the molding components to possibly effect adjustments and corrections. Furthermore, it should be recognized that well-known, conventional machine vision and/or inspection systems typically have incorporated therein part detection devices (such as element 45 in Figure 1), tracking features and conveyance mechanisms and systems (such as transport mechanism 40) that are deployed to interact with the objects under inspection and used to maneuver the objects under inspection into an advantageous position between the sensor and the source as well as provide instrument control signals to both the sensor and the source.

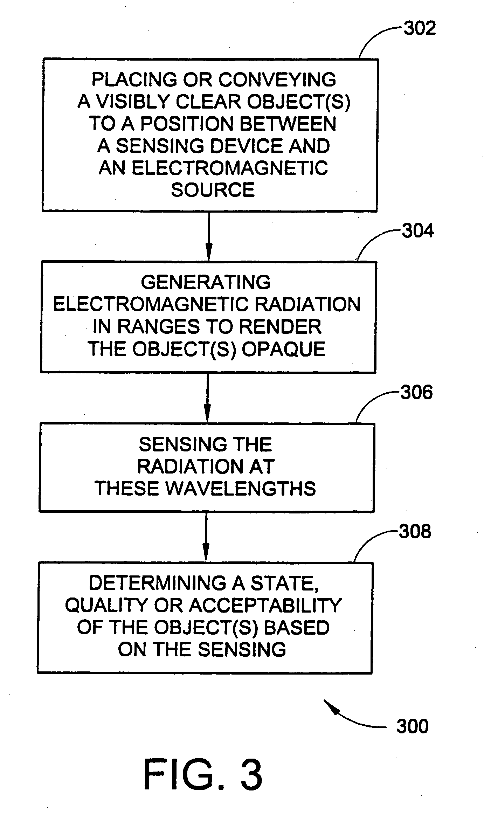

It should be readily apparent from the detailed description above, that in operation, the system of the present invention accomplishes the method of Figure 3 as follows. First, a visibly clear object is placed or conveyed to a position between a sensing device and an electromagnetic source (step 302). Next, electromagnetic radiation is generated by the source in wavelength ranges to render the objects under inspection opaque (step 304). The radiation is then sensed at these wavelengths, which correspond to the opaque wavelength regions of the objects under inspection (step 306). A state, quality or acceptability is then determined based on the sensing (step 308). In addition, other features of the invention as described above may be embodied in this method. For example, the generating step may include pulsing the source means to increase a signal to noise ratio of a subsequentially received electromagnetic signal.

## Claims

1. A sensing apparatus useful for inspecting the structural integrity of visibly clear objects (10), the apparatus comprising a sensor device (60), an electromagnetic radiation source (20) and a support structure positioned to support the sensor device (60) and source (20) and to maintain the objects (10) in between the source (20) and the sensor device (60), **characterized in that**
the sensor device (60) is operative to respond to electromagnetic radiation at one or more wavelengths or wavelength ranges corresponding to electromagnetic energy transmission wherein the objects are rendered opaque by naturally occurring molecular and/or atomic absorptions occurring within material comprising the objects (10), and
the electromagnetic radiation source (20) emits a spectrum with a significant portion which occurs in the ranges wherein the objects (10) are generally opaque.

2. The apparatus of claim 1 wherein the sensor device (60) is comprised of a single-element photoconductive, photovoltaic, or thermal detector.

3. The apparatus of claim 1 or 2 further comprising a processor operative to receive an output of the sensor device (60) and operate on the output to determine the state, quality, or acceptability of the objects (10).

4. The apparatus according to any one of the preceding claims further comprising part detection, tracking, and conveyance systems (45, 40) deployed to interact with the objects (10) and used to both maneuver the object (10) under test into an advantageous position between the sensor device (60) and the source (20) and to provide instrument control signals to both the sensor device (60) and the source (20).

5. The apparatus according to any one of the preceding claims further comprising a reject system (50) which receives the processed output of the processor and acts to physically reject or otherwise mark for subsequent action objects (10).

6. The apparatus according to any one of the preceding claims wherein the source (20) comprises a black or gray body thermal emitter.

7. The apparatus of claim 6 wherein the source is amplitude modulated by a mechanical chopping system (30) in order to increase a signal to noise ratio of a subsequently received electromagnetic signal.

8. The apparatus according to any one of claims 1 to 5 wherein the source (20) comprises a semiconductor LED type emitter or array of emitters.

9. The apparatus of claim 8 wherein the source (20) is pulsed in order to increase a signal to noise ratio of a subsequently received electromagnetic signal.

10. The apparatus of claim 1 wherein the sensor device (60) is comprised of a one or two-dimensional array of photosensitive elements.

11. A sensing method wherein visibly clear objects (10) are inspected for structural integrity, the method comprising steps of:
placing a visibly clear object (10) under test disposed in between a sensor device (60) and a source (20) of electromagnetic radiation;
generating electromagnetic radiation with source (20)
sensing with the sensor device (60) the electromagnetic radiation; and,
determining a state, quality, or acceptability of the objects (10) based on an output of the sensor device (60), **characterized in that** source (20) generates an electromagnetic radiation in wavelength ranges such that the objects (10) are substantially opaque due to naturally occurring molecular or atomic absorptions occurring in material comprising the objects (10), the ranges corresponding to both the opaque wavelength regions of the objects (10) and sensitivity regions of the sensing device (60) and the sensor device (60) senses the electromagnetic radiation at the wavelengths which correspond to the opaque wavelength regions of the objects (10) under test.

12. The method of claim 11, wherein the sensing comprises using a single-element photoconductive, photovoltaic, or thermal detector.

13. The method of claim 11 or 12 further comprising using processing means to receive output of the sensor device (60) and to operate on the output to determine a state, quality, or acceptability of the objects (10).

14. The method according to any one of claims 11 to 13 further comprising using part detection, tracking, and conveyance systems (45, 40) deployed to interact with the objects (10) and useful to both maneuver the objects (10) into an advantageous position between the sensor device (60) and the source (20) of the electromagnetic radiation and to provide instrument control signals to both the sensor device (60) and the source (20).

15. The method according to any one of claims 11 to 14 further comprising using a reject system (50) to receive processed output of the processing means and to physically reject or otherwise mark objects (10).

16. The method according to any one of claims 11 to 15 wherein the generating of electromagnetic radiation with source (20) comprises using a black or gray body thermal emitter.

17. The method according to any one of claims 11 to 16 wherein the generating of electromagnetic radiation with source (20) comprises amplitude modulating the radiation by a mechanical chopping system (30) in order to increase a signal to noise ratio of a subsequently received electromagnetic signal.

18. The method according to any one of claim 11 to 16 wherein the generating of electromagnetic radiation with source (20) comprises using a semiconductor LED type emitter or array of emitters.

19. The method of claim 18 further comprising pulsing the source (20) in order to increase a signal to noise ratio of a subsequently received electromagnetic signal.

20. The method of claim 11 wherein the sensing comprising using a one or two-dimensional array of photosensitive elements.

## Patentansprüche

1. Ein Meßgerät, daß geeignet ist die Strukturintegrität von durchsichtigen Gegenständen (10) zu untersuchen, wobei das Gerät eine Sensoreinrichtung (60), eine elektromagnetische Strahlenquelle (20) und eine Unterstützungskonstruktion umfaßt, die so positioniert ist, daß die Sensoreinrichtung (60) und die Quelle (20) getragen werden und das sichergestellt wird, daß die Gegenstände (10) zwischen der Quelle (20) und der Sensoreinrichtung (60) sind, **dadurch gekennzeichnet, daß** die Sensoreinrichtung (60) funktionsfähig ist, auf elektromagnetische Strahlung in einer oder mehrer Wellenlängen oder Bereichen von Wellenlängen zu reagieren, entsprechend dem Transport der elektromagnetischen Energie, worin die Gegenstände durch natürlich vorkommende molekulare und/oder atomare Absorptionen die im Material, welches die Gegenstände (10) umfaßt, auftreten, undurchlässig werden und die elektromagnetische Strahlenquelle (20) ein Spektrum emittiert von welchem ein erheblicher Teil in den Bereichen liegt, in dem die Gegenstände (10) im Allgemeinen undurchlässig sind.

2. Das Gerät von Anspruch 1, bei welchem die Sensoreinrichtung (60) einen einfachen fotoleitenden, fotovoltaischen oder thermischen Detektor beinhaltet.

3. Das Gerät von Anspruch 1 oder 2, welches weiterhin einen Prozessor beinhaltet, welcher dazu in der Lage ist eine Ausgabe der Sensoreinrichtung (60) zu empfangen und mit dieser Ausgabe zu arbeiten, um den Zustand, die Qualität oder Eignung der Gegenstände (10) zu bestimmen.

4. Das Gerät gemäß jedem der vorhergehenden Ansprüche, welches weiterhin Systeme zur Teileüberwachung, Ortung und zum Transport (45, 40) beinhaltet, die eingesetzt werden, um mit den Gegenständen (10) zu interagieren und die benutzt werden um sowohl den Gegenstand (10), der getestet wird, in eine vorteilhafte Position zwischen der Sensoreinrichtung (60) und der Quelle (20) zu bewegen, als auch um Instrumentsteuersignale an beide, die Sensoreinrichtung (60) und die Quelle (20) zu liefern.

5. Das Gerät gemäß jedem der vorhergehenden Ansprüche, welches weiterhin ein Ausschußsystem (50) beinhaltet, welches die verarbeitete Ausgabe des Prozessors empfängt und so arbeitet, daß es Gegenstände (10) physikalisch aussondert oder auf andere Art und Weise für nachfolgenden Aktionen markiert.

6. Das Gerät gemäß jedem der vorhergehenden Ansprüche, bei welchem die Quelle (20) einen thermischen Schwarzen Strahler oder grauen Strahler beinhaltet.

7. Das Gerät gemäß Anspruch 6, bei welchem die Quelle durch ein mechanisches Taktsystem (30) amplitudenmoduliert wird, um das Signal-Stör-Verhältnis eines nachfolgend empfangenen, elektromagnetischen Signals zu erhöhen.

8. Das Gerät gemäß jedem der Ansprüche 1 bis 5, bei welchem die Quelle (20) einen Halbleiter LED Emitter oder ein Array von Emittern beinhaltet.

9. Das Gerät gemäß Anspruch 8, bei welchem die Quelle (20) gepulst wird, um das Signal-Stör-Verhältnis eines nachfolgend empfangenen, elektromagnetischen Signals zu erhöhen.

10. Das Gerät gemäß Anspruch 1, bei welchem die Sensoreinrichtung (60) ein ein- oder zweidimensionales Array photoempfindlicher Elemente beinhaltet.

11. Eine Meßverfahren, bei welchem durchsichtige Gegenstände (10) auf Strukturintegrität überprüft werden, wobei das Verfahren folgende Schritte umfaßt:
Plazieren eines durchsichtigen Gegenstands (10), der überprüft wird, zwischen eine Sensoreinrichtung (60) und eine elektromagnetische Strahlenquelle (20); erzeugen von elektromagnetischer Strahlung mit der Quelle (20), messen der elektromagnetischen Strahlung mit der Sensoreinrichtung (60); und bestimmen des Zustands, der Qualität oder Eignung der Gegenstände (10), basierend auf einer Ausgabe der Sensoreinrichtung (60), **gekennzeichnet dadurch**, das die Quelle (20) eine elektromagnetische Strahlung in Bereichen von Wellenlängen erzeugt, so daß die Gegenstände (10) durch natürlich vorkommende molekulare und/oder atomare Absorptionen die im Material, welches die Gegenstände 10 umfaßt, auftreten, im Wesentlichen undurchlässig sind, wobei die Bereiche sowohl den Wellenlängenbereichen bei welchen die Gegenstände (10) undurchsichtig sind, und den Empfindlichkeitsbereichen der Sensoreinrichtung (60) entsprechen und die Sensoreinrichtung (60) die elektromagnetische Strahlung mißt, die den Wellenlängenbereichen bei welchen die Gegenstände (10), die überprüft werden, undurchsichtig sind, entspricht.

12. Das Verfahren von Anspruch 11, bei welchem die Messung einen einfachen fotoleitenden, fotovoltaischen oder thermischen Detektor beinhaltet.

13. Das Verfahren von Anspruch 11 oder 12, welches weiterhin beinhaltet Prozessierungsfähigkeiten zu nutzen, um die Ausgabe der Sensoreinrichtung (60) zu empfangen und mit dieser Ausgabe zu arbeiten, um den Zustand, die Qualität oder Eignung der Gegenstände (10) zu bestimmen.

14. Das Verfahren gemäß jedwedem der Ansprüche 11 bis 13, welches weiterhin Systeme zur Teileüberwachung, Ortung und zum Transport (45, 40) beinhaltet, die eingesetzt werden, um mit den Gegenständen (10) zu interagieren und die geeignet sind, um sowohl den Gegenstand (10), der getestet wird, in eine vorteilhafte Position zwischen der Sensoreinrichtung (60) und der Quelle der elektromagnetischen Strahlung (20) zu bewegen, als auch um Instrumentsteuersignale an beide, die Sensoreinrichtung (60) und die Quelle (20) zu liefern.

15. Das Verfahren gemäß jedwedem der Ansprüche 11 bis 14, welches weiterhin die Benutzung eines Ausschußsystems (50), um die verarbeitete Ausgabe der Prozessierungsfähigkeiten zu empfangen und die Gegenstände (10) physikalisch auszusondern oder auf andere Art und Weise zu markieren.

16. Das Verfahren gemäß jedwedem der Ansprüche 11 bis 15, bei welchem die Erzeugung von elektromagnetischer Strahlung mit der Quelle (20) die Benutzung eines thermischen Schwarzen Strahlers oder grauen Strahlers beinhaltet.

17. Das Verfahren gemäß jedwedem der Ansprüche 11 bis 16, bei welchem die Erzeugung von elektromagnetischer Strahlung mit der Quelle (20) die Amplitudenmodulierung der Strahlung durch ein mechanisches Taktsystem (30) beinhaltet, um das Signal-Stör-Verhältnis eines nachfolgend empfangenen, elektromagnetischen Signals zu erhöhen.

18. Das Verfahren gemäß jedwedem der Ansprüche 11 bis 16, bei welchem die Erzeugung von elektromagnetischer Strahlung mit der Quelle (20) die Benutzung eines Halbleiter LED Emitters oder eines Arrays von Emittern beinhaltet.

19. Das Verfahren gemäß Anspruch 18, welches weiterhin beinhaltet die Quelle (20) zu pulsen, um das Signal-Stör-Verhältnis eines nachfolgend empfangenen, elektromagnetischen Signals zu erhöhen.

20. Das Verfahren gemäß Anspruch 11, bei welchem die Messung die Benutzung eines ein- oder zweidimensionalen Arrays photoempfindlicher Elemente beinhaltet.

## Revendications

1. appareil de détection permettant d'inspecter l'intégrité structurelle d'objets visiblement transparents (10), l'appareil comprenant un dispositif détecteur (60), une source de rayonnement électromagnétique (20) et une structure de support positionnée pour supporter le dispositif détecteur (60) et la source (20) et pour maintenir les objets (10) entre la source (20) et le dispositif détecteur (60), **caractérisé en ce que**
le dispositif détecteur (60) est exploitable pour répondre à un rayonnement électromagnétique à une ou plusieurs longueurs d'onde ou plages de longueurs d'onde correspondant à une transmission d'énergie électromagnétique dans laquelle les objets sont rendus opaques par des absorptions moléculaires et/ou atomiques se produisant naturellement, se produisant à l'intérieur du matériau composant les objets (10), et
la source de rayonnement électromagnétique (20) émet un spectre avec une portion significative qui se produit dans les plages dans lesquelles les objets (10) sont généralement opaques.

2. Appareil selon la revendication 1, dans lequel le dispositif détecteur (60) comprend un détecteur photoconducteur, photovoltaïque ou thermique à élément unique.

3. Appareil selon la revendication 1 ou 2, comprenant en outre un processeur exploitable pour recevoir une sortie du dispositif détecteur (60) et opérer sur la sortie pour déterminer l'état, la qualité ou l'acceptabilité des objets (10).

4. Appareil selon l'une quelconque des revendications précédentes, comprenant en outre des systèmes de détection, suivi et transport de pièces (45, 40) déployés pour interagir avec les objets (10) et utilisés à la fois pour manoeuvrer l'objet (10) soumis au test dans une position avantageuse entre le dispositif détecteur (60) et la source (20) et pour fournir des instruments de commande d'instrument à la fois au dispositif détecteur (60) et à la source (20).

5. Appareil selon l'une quelconque des revendications précédentes, comprenant en outre un système de rejet (50) qui reçoit la sortie élaborée du processeur et agir pour rejeter physiquement ou marquer autrement pour une action ultérieure les objets (10).

6. Appareil selon l'une quelconque des revendications précédentes, dans lequel la source (20) comprend un émetteur thermique de corps noir ou gris.

7. Appareil selon la revendication 6, dans lequel la source est modulée en amplitude par un système de découpage mécanique (30) de manière à augmenter un rapport signal/bruit d'un signal électromagnétique ultérieurement reçu.

8. Appareil selon l'une quelconque des revendications 1 à 5, dans lequel la source (20) comprend un émetteur ou un réseau d'émetteurs de type LED à semi-conducteur.

9. Appareil selon la revendication 8, dans lequel la source (20) est pulsée de manière à augmenter un rapport signal/bruit d'un signal électromagnétique ultérieurement reçu.

10. Appareil selon la revendication 1, dans lequel le dispositif détecteur (60) est composé d'un réseau à une ou deux dimensions d'éléments photosensibles.

11. Procédé de détection dans lequel l'intégrité structurelle d'objets visiblement transparents (10) est inspectée, le procédé comprenant les étapes suivantes à :
placer un objet visiblement transparent (10) soumis au test disposé entre un dispositif détecteur (60) et une source (20) de rayonnement électromagnétique,
générer un rayonnement électromagnétique avec la source (20)
détecter avec le dispositif détecteur (60) le rayonnement électromagnétique ; et
déterminer un état, une qualité ou acceptabilité des objets (10) sur la base d'une sortie du dispositif détecteur (60), **caractérisé en ce que** la source (20) génère un rayonnement électromagnétique dans des plages de longueurs d'onde telles que les objets (10) soient sensiblement opaques en raison d'absorptions moléculaires et/ou atomiques se produisant naturellement, se produisant dans le matériau composant les objets (10), les plages correspondant à la fois aux régions de longueurs d'onde opaques des objets (10) et aux régions de sensibilité du dispositif détecteur (60) et le dispositif détecteur (60) détecte le rayonnement électromagnétique à des longueurs d'onde qui correspondent aux régions de longueurs d'onde opaques des objets (10) soumis au test.

12. Procédé selon la revendication 11, dans lequel la détection comprend l'utilisation d'un détecteur photoconducteur, photovoltaïque ou thermique à élément unique.

13. Procédé selon la revendication 11 ou 12, comprenant en outre l'utilisation d'un moyen de traitement pour recevoir la sortie du dispositif détecteur (60) et pour opérer sur la sortie pour déterminer un état, une qualité ou acceptabilité des objets (10).

14. Procédé selon l'une quelconque des revendications 11 à 13, comprenant en outre l'utilisation de systèmes de détection, suivi et transport de pièces (45, 40) déployés pour interagir avec les objets (10) et utiles à la fois pour manoeuvrer les objets (10) dans une position avantageuse entre le dispositif détecteur (60) et la source (20) du rayonnement électromagnétique et pour fournir des signaux de commande d'instrument à la fois au dispositif détecteur (60) et à la source (20).

15. Procédé selon l'une quelconque des revendications 11 à 14, comprenant en outre l'utilisation d'un système de rejet (50) pour recevoir la sortie élaborée des moyens de traitement et pour rejeter physiquement ou marquer autrement des objets (10).

16. Procédé selon l'une quelconque des revendications 11 à 15, dans lequel la génération de rayonnement électromagnétique avec la source (20) comprend l'utilisation d'un émetteur thermique de corps noir ou gris.

17. Procédé selon l'une quelconque des revendications 11 à 16, dans lequel la génération de rayonnement électromagnétique avec la source (20) comprend la modulation en amplitude du rayonnement par un système de découpage mécanique (30) de manière à augmenter un rapport signal/bruit d'un signal électromagnétique reçu ultérieurement.

18. Procédé selon l'une quelconque des revendications 11 à 16, dans lequel la génération de rayonnement électromagnétique avec la source (20) comprend l'utilisation d'un émetteur ou réseau d'émetteurs de type LED à semi-conducteur.

19. Procédé selon la revendication 18, comprenant en outre l'impulsion de la source (20) de manière à augmenter un rapport signal/bruit d'un signal électromagnétique reçu ultérieurement.

20. Procédé selon la revendication 11, dans lequel la détection comprend l'utilisation d'un réseau à une ou deux dimensions d'éléments photosensibles.
